# EUROPÄISCHE PATENTSCHRIFT

(11) **EP 0 432 547 B1**
(45) Veröffentlichungstag und Bekanntmachung des Hinweises auf die Patenterteilung: **29.03.1995**
(21) Anmeldenummer: 90122417.0
(22) Anmeldetag: 23.11.1990
(51) Int. Cl.: H04M 1/02

(54) **Dämpfungsvorrichtung für an einer Fernsprechstation angeordnete Klappen oder Blenden**
Damping device for lids or flaps of a subscriber set
Dispositif d'amortissement pour des couvercles ou volets associés à un poste téléphonique

(30) Priorität: 14.12.1989 DE 8914713 U
(43) Veröffentlichungstag der Anmeldung: 19.06.1991
(73) Patentinhaber: SIEMENS AKTIENGESELLSCHAFT, 80333 München (DE)
(72) Erfinder: Kroesen, Klaus, Dipl.-Ing., W-4294 Isselburg-Anholt (DE)

(56) Entgegenhaltungen:
- EP-A- 0 074 319
- DE-A- 3 442 015
- DE-U- 9 010 635
- US-A- 4 291 202

## Beschreibung

Die Erfindung beinhaltet eine Dämpfungsvorrichtung für an einer Fernsprechstation angeordnete Klappen oder Blenden, wobei die Fernsprechstation mit einer Wähltastatur ausgestattet ist, deren einzelne Tasten über Hubbälge einer Gummimatte auf Schaltkontakte einer Leiterplatte einwirken.

Bei Fernsprechgeräten mit einer Wähltastatur wirken die einzelnen Tasten auf Hubbälge einer Gummimatte ein, wobei im Inneren dieser Hubbälge Kontaktteile vorgesehen sind, durch die auf der Leiterplatte angeordnete Schaltkontakte überbrückt werden vgl. z.B. EP-A-0 074 319 oder US-A-4 291 202. Weiterhin sind an modernen Fernsprechgeräten als Abdeckung für einzelne Gerätebereiche Klappen oder Blenden vorgesehen, die durch entsprechende Mittel aus dämpfendem Material, z. B. Gummi gehaltert sein müssen, um bei Benutzung des Fernsprechers als Freisprechgerät keine störenden Klapper- oder Scheppergeräusche abzugeben.

Aufgabe der vorliegenden Erfindung ist es, eine Dämpfungsvorrichtung für derartige Blenden oder Klappen aufzuzeigen, die unter Einbeziehung bereits vorhandener Teile im Fernsprechgerät kostengünstig und einfach herstellbar ist.

Diese Aufgabe wird dadurch gelöst, daß die Dämpfungsvorrichtung durch mit der Gummimatte einstückig verbundene Dome gebildet ist, die durch Aussparungen im Gehäuseoberteil der Fernsprechstation hindurchragen und die Gehäuseoberteilfläche geringfügig überragen.

Die im Tastaturfernsprechgehäuse erforderliche Gummimatte kann also in diesem Fall dazu verwendet werden, zusätzliche Aufgaben zur Dämpfung von Klappen oder Blenden zu übernehmen. Hierbei bewirken die bei der Herstellung der Gummimatte direkt mit hergestellten Dome einmal, daß z. B. geöffnete und durch Federkraft verschwenkte Klappen bei ihrem Aufschlag auf das Fernsprechgehäuse gedämpft werden, zum anderen werden z. B. bei Blenden Klappergeräusche vermieden, die z. B. bei Verwendung des Fernsprechgerätes als Freisprechgerät auftreten können.

Gemäß einer weiteren Ausgestaltung der Erfindung können der oder die Dome an ihren im Gehäuseinneren der Fernsprechstation befindlichen Bereichen jeweils einen einstückig mit ihnen verbundenen umlaufenden Kragen aufweisen, der an der Aussparung zur Anlage gelangt. Dadurch kann in einfacher Weise ein unerwünschtes Eindringen von Staub in das Geräteinnere der Fernsprechstation verhindert werden.

Die Erfindung soll im folgenden anhand eines Ausführungsbeispiels näher erläutert werden.

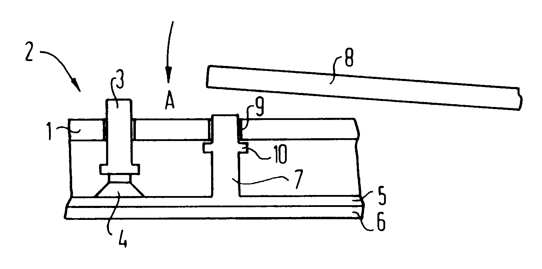

Die Abbildung zeigt ausschnittsweise Teile einer Fernsprechstation mit einer Dämpfungsvorrichtung für eine als Klappe gestaltete Abdeckung.

Im Gehäuseoberteil 1 einer Fernsprechstation 2 ist eine Wähltastatur eingebaut, von der bei diesem Ausführungsbeispiel lediglich eine Taste 3 dargestellt ist. Diese Taste 3 wirkt auf den Hubbalg einer aus Silikonkautschuk bestehenden Gummimatte 5 ein. Mittels eines am Hubbalg 4 vorgesehenen, hier nicht dargestellten Kontaktteils werden im niedergedrückten Zustand der Taste 3 ebenfalls nicht dargestellte Kontakte auf der Leiterplatte 6 betätigt.

Mit der Gummimatte 5 ist einstückig ein Dom 7 verbunden, der durch eine Aussparung 9 im Gehäuseoberteil hindurchragt und die Gehäuseoberteilfläche geringfügig überragt. Dieser Dom 7 dient zur Aufschlags- und Vibrationsdämpfung für eine in Pfeilrichtung A zu schließende Klappe 8. Durch diesen Dom 7 wird somit einmal die Klappe 8 beim Schließen bzw. Öffnen gedämpft, zum anderen werden z. B. bei eingeschalteter Freisprechfunktion der Fernsprechstation Klappergeräusche von lose am Fernsprecher angeordneten Teilen, wie Blenden und Klappen, aufgrund der vibrationsdämpfenden Eigenschaften des Silikonkautschuks unterbunden. Um ein Eindringen von Staub in das Gehäuseinnere der Fernsprechstation zu vermeiden, kann der Dom 7 an seinem im Gehäuseinneren befindlichen Bereich weiterhin einen mit ihm einstükkig verbundenen umlaufenden Kragen 10 aufweisen, der an der Aussparung 9 im Gehäuseinneren zur Anlage gelangt.

## Patentansprüche

1. Dämpfungsvorrichtung für an einer Fernsprechstation (2) angeordnete Klappen (8) oder Blenden, wobei die Fernsprechstation (2) mit einer Wähltastatur ausgestattet ist, deren einzelne Tasten (3) über Hubbälge (4) einer Gummimatte (5) auf Schaltkontakte einer Leiterplatte (6) einwirken, **dadurch gekennzeichnet,** daß die Dämpfungsvorrichtung durch mit der Gummimatte (5) einstückig verbundene Dome (7) gebildet ist, die durch Aussparungen (9) im Gehäuseoberteil (1) der Fernsprechstation (2) hindurchragen und die Gehäuseoberteilfläche geringfügig überragen.

2. Dämpfungsvorrichtung nach Anspruch 1, **dadurch gekennzeichnet,** daß die Dome (7) an ihren im Gehäuseinneren der Fernsprechstation (2) befindlichen Bereichen jeweils einen einstückig mit ihnen verbundenen umlaufenden Kragen (10) aufweisen, der an der Aussparung (9) im Gehäuseinneren zur Anlage gelangt.

## Claims

1. Damping device for flaps (8) or screens arranged on a telephone station (2), the telephone station (2) being provided with a dialling keyboard whose individual keys (3) act via lifting bellows (4) of a rubber mat (5) on switching contacts of a printed circuit board (6), characterized in that the damping device is formed by domes (7) integrally connected to the rubber mat (5), which domes project through cutouts (9) in the upper housing part (1) of the telephone station (2) and slightly project over the upper housing part area.

2. Damping device according to Claim 1, characterized in that the domes (7) have on their regions located in the housing interior of the telephone station (2) in each case one circumferential collar (10) integrally connected to said regions, which collar comes to bear against the cutout (9) in the housing interior.

## Revendications

1. Dispositif d'amortissement pour des couvercles (8) ou des volets, qui sont montés sur un poste téléphonique (2), qui est équipé d'un clavier de sélection, dont les différentes touches (3) agissent, par l'intermédiaire de soufflets de levage (4) d'un mat en caoutchouc (5) sur des contacts de commutation d'une plaquette à circuits imprimés (6), caractérisé par le fait que le dispositif d'amortissement est formé par des bossages (7) qui sont reliés d'un seul tenant au mat en caoutchouc (5) et traversent des ouvertures (9) ménagées dans la partie supérieure (1) du boîtier du poste téléphonique (2) et font légèrement saillie au-delà de la surface supérieure du boîtier.

2. Dispositif d'amortissement suivant la revendication 1, caractérisé par le fait que les bossages (7) possèdent chacun, dans leurs zones situées à l'intérieur du boîtier du poste téléphonique (2), un collet circonférentiel respectif (10), qui est relié d'un seul tenant au bossage et vient s'appliquer contre l'ouverture (9) à l'intérieur du boîtier.
